Europäisches Patentamt

European Patent Office

Office européen des brevets

(19)

(11) Veröffentlichungsnummer: **0 161 714**
A2

# (12) EUROPÄISCHE PATENTANMELDUNG

(21) Anmeldenummer: 85200696.4

(22) Anmeldetag: 03.05.85

(51) Int. Cl.⁴: **H 04 N 5/10**

(30) Priorität: 14.05.84 DE 3417795

(43) Veröffentlichungstag der Anmeldung: 21.11.85
Patentblatt 85/47

(84) Benannte Vertragsstaaten: **DE FR GB IT**

(71) Anmelder: **Philips Patentverwaltung GmbH,
Billstrasse 80, D-2000 Hamburg 28 (DE)**

(84) Benannte Vertragsstaaten: **DE**

(71) Anmelder: **N.V. Philips' Gloeilampenfabrieken,
Groenewoudseweg 1, NL-5621 BA Eindhoven (NL)**

(84) Benannte Vertragsstaaten: **FR GB IT**

(72) Erfinder: **Oldach, Detlef, Dahlgrünring 6,
D-2102 Hamburg 93 (DE)**

(74) Vertreter: **Hartmann, Heinrich, Dipl.-Ing. et al, Philips
Patentverwaltung GmbH
Billstrasse 80 Postfach 10 51 49,
D-2000 Hamburg 28 (DE)**

(54) Schaltungsanordnung zum Bilden eines Bildsynchronsignals aus einem Synchronsignal in einem Videosignal.

(57) Eine Schaltungsanordnung zum Bilden eines Bildsynchronsignals aus einem Synchronsignal, das aus einem Videosignal abgeleitet wird, mit einer Bildsynchronimpulsgeberstufe (22), die das Bildsynchronsignal abgibt und die eine Ausgleichsimpulsdetektionsanordnung (30) zum Erkennen eines genormten Bildwechselsignals enthält, welche ein Ausgleichsimpulskennsignal (Trabantenkennsignal) abgibt, wenn das Synchronsignal Ausgleichsimpulse enthält, und zwar wenn im Zeilensynchronsignal Impulse im Abstand wenigstens nahezu einer halben Zeilendauer des Videosignals auftreten. Die Bildsynchronimpulsgeberstufe (22) enthält zugleich einen Zeitgeber (27), der das Bildsynchronsignal abgibt und der durch das Ausgleichsimpulskennsignal umschaltbar ist.

Schaltungsanordnung zum Bilden eines Bildsynchronsignals
aus einem Synchronsignal in einem Videosignal

Die Erfindung bezieht sich auf eine Schaltungsanordnung
zum Bilden eines Bildsynchronsignals aus einem Synchronsignal, das wenigstens ein Zeilen- und ein Bildsynchronsignal enthält und das aus einem ankommenden Videosignal
abgeleitet wird, mit einer Bildsynchronimpulsgeberstufe
zum Ableiten des Bildsynchronsignals, die eine Ausgleichsimpulsselektionsanordnung zum Erkennen eines genormten, im
Synchronsignal enthaltenen Bildwechselsignals enthält,
welche ein Ausgleichsimpulskennsignal abgibt, wenn das
Synchronsignal Ausgleichsimpulse enthält.

Eine derartige Schaltungsanordnung ist aus der
US-Veröffentlichung IEEE Transactions and Consumer
Electronics, Vol. CE-23, Nr. 3, August 1977, Seiten 311
bis 326, bekannt. In dieser bekannten Schaltungsanordnung
wird ein Ausgleichsimpulskennsignal (Trabantenkennsignal)
abgegeben, wenn im Bildwechselsignal Ausgleichsimpulse
(Trabantenimpulse) vorliegen. Dadurch wird ein normgerechtes Synchronsignal erkannt. Dazu weist die bekannte
Schaltungsanordnung eine Detektionsanordnung auf, mit der
die Anzahl der während des Bildwechsels im Synchronsignal
auftretenden Übergänge gezählt werden. Weil ein US-normgerechtes Fernsehsignal während 6 Zeilenperioden
12 Übergänge aufweist und ein nicht normgerechtes Signal
nur 6 Übergänge, gibt die Detektionsanordnung das Kennsignal ab, wenn mehr als 6 Übergänge gezählt werden.

Wenn das ankommende Videosignal verrauscht und gestört
ist, ist es möglich, daß im Synchronsignal so viele Störimpulse vorliegen, daß eine größere Anzahl von Übergängen auftritt. In einem solchen Fall ist das gewählte Kriterium nicht zuverlässig. Der Erfindung liegt die Aufgabe zugrunde, eine Detektionsanordnung zu schaffen, die unempfindlicher gegen Störungen als die bekannte Anordnung ist. Dazu weist die erfindungsgemäße Schaltungsanordnung das Kennzeichen auf, daß die Ausgleichsimpulsdetektionsanordnung eine Auswahlanordnung zu Abgeben des Ausgleichsimpulskennsignal enthält, wenn im Zeilensynchronsignal Impulse im Abstand wenigstens nahezu einer halben Zeilendauer des Videosignals auftreten und daß die Bildsynchronimpulsgeberstufe einen Zeitgeber zum Abgeben des Bildsynchronsignals enthält, der einen Eingang für das Ausgleichsimpulskennsignal und einen Eingang für das Synchronsignal aufweist und der durch das Ausgleichsimpulskennsignal umschaltbar ist.

Mit einer derartigen Anordnung ist eine frühzeitige Erkennung des genormten, im Synchronsignal enthaltenen Bildwechselsignals möglich. Es wird eine bessere Störungsunempfindlichkeit erreicht, da die Störimpulse im allgemeinen in einem Abstand aufeinanderfolgen, der nicht gleich eine halben Zeilendauer ist.

Nach einer Weiterbildung der Erfindung ist vorgesehen, daß die Ausgleichsimpulsdetektionsanordnung eine mit einer Zeilensynchronimpulsgeberstufe zum Abgeben des Zeilensynchronsignals verbundenen ersten Zählvorrichtung zum Zählen der Anzahl der Perioden eines Abtasttaktes im Zeitintervall zwischen zwei aufeinanderfolgende Impulsen des Zeilensynchronsignals umfaßt und daß eine Auswahlanordnung einen mit der ersten Zählvorrichtung gekoppelten Eingang für die Zuführung eines dieser Anzahl entsprechenden Signals aufweist und das Ausgleichsimpulskennsignal abgibt, wenn diese Anzahl innerhalb eines bestimmten Wertebereichs liegt, der eine halbe Zeilendauer im Videosignal umfaßt.

0 161 714

PHD 84-077 EP

Dadurch wird in einfacher Weise die Periodendauer des Abtasttaktes als Zeitnormal für die Erkennung der Abstände der Impulse im Synchronsignal herangezogen. Durch Eingrenzung des Wertebereichs für die Anzahl der Perioden des Abtasttaktes zwischen zwei aufeinanderfolgenden Impulsen ist die Empfindlichkeit der Ausgleichsimpulsdetektionsanordnung gegenüber Störimpulsen gering gehalten.

Nach einer weiteren Ausgestaltung der Erfindung ist vorgesehen, daß der Zeitgeber eine zweite Zählvorrichtung zum Zählen der Perioden eines Abtasttaktes nach dem Auftreten der Vorderflanke eines Impulses in dem Zeitgeber zugeführten Synchronsignal enthält und daß der Zeitgeber das Bildsynchronsignal abgibt, wenn im Sychronsignal Impulse vorgebbarer Mindestdauer auftreten. Dadurch können in einfacher Weise verschiedenartige Bildwechselsignale im Synchronsignal detektiert werden, da sowohl bei normgerechten als auch bei nicht normgerechten Verläufen des Synchronsignals in der Regel ein gegenüber den übrigen Synchronimpulsen längerer Impuls als Bildwechselsignal auftritt.

Der Zeitgeber umfaßt vorzugsweise weiterhin eine Dekoderschaltung zum Dekodieren der Stellung der zweiten Zählvorrichtung, die der vorgebbaren Mindestdauer der Impulse entspricht. Die Mindestdauer der Impulse und damit die Erkennung der Wechselsignale und die Abgabe des Bildsynchronsignals wird so auf einfache Weise an die Abtasttaktperiode als Zeitnormal gekoppelt. Dadurch wird eine exakte Detektion der Bildwechselsignale ermöglicht.

Nach einer weiteren Ausgestaltung der Erfindung ist die von der Dekoderschaltung dekodierte Stellung der zweiten Zählvorrichtung durch das Ausgleichsimpulskennsignal umschaltbar. Durch diese Maßnahme läßt sich die Erkennung des Bildwechselsignals beschleunigen, da bei einem normgerechten Signal mit Vorausgleichsimpulsen der erste längere Impuls nach den Vorausgleichsimpulsen ein Bildwechselimpuls ist.

Nach einer weiteren Fortbildung der Erfindung enthält die Bildsynchronimpulsgeberstufe eine Überwachungsstufe zum Abgeben eines einem normgerechten oder nicht normgerechten Verlauf des Synchronsignals anzeigenden Überwachungssignals, die einen Eingang für das Ausgleichsimpulskennsignal und einen Eingang für das Bildsynchronsignal aufweist. Zusammen mit dem Bildsynchronsignal wird aus dem Ausgleichsimpulskennsignal das Überwachungssignal gebildet, das anzeigt, daß der Verlauf des Synchronsignals im Zeitraum des Bildwechselsignals normgerecht ist. Beim Auftreten eines nicht normgerechten Verlaufs des Synchronsignals, beispielsweise eines einzigen, über mehrere Zeilendauern des Fernsehsignals sich erstreckenden Bildwechselimpulses, bleibt das Ausgleichsimpulskennsignal aus. Das Überwachungssignal zeigt dann den nicht normgerechten Verlauf des Synchronsignals an.

Das Überwachungssignal wird beispielsweise einer der beschriebenen Schaltungsanordnung nachgeschalteten, digitalen Oszillatoranordnung zugeführt, die durch das Zeilensynchronsignal und/oder das Bildsynchronsignal in Frequenz und/oder Phase mit dem Fernsehsignal synchronisiert wird. Durch das Überwachungssignal kann die von dieser Oszillatoranordnung abgegebenen Schwingung dem jeweiligen Verlauf des Synchronsignals angepaßt werden.

Ein Ausführungsbeispiel der erfindungsgemäßen Schaltungsanordnung ist in der Zeichnung dargestellt und wird im Nachfolgenden näher beschrieben. Es zeigen

0 161 714

Fig. 1 ein Blockschaltbild einer Schaltungsanordnung nach der Erfindung,

Fig. 2 ein etwas detaillierteres Blockschaltbild eines Teils der Schaltungsanordnung nach Fig. 1,

Fig. 3 ein etwas detaillierteres Schaltbild eines weiteren Teils der Schaltungsanordnung nach Fig. 1.

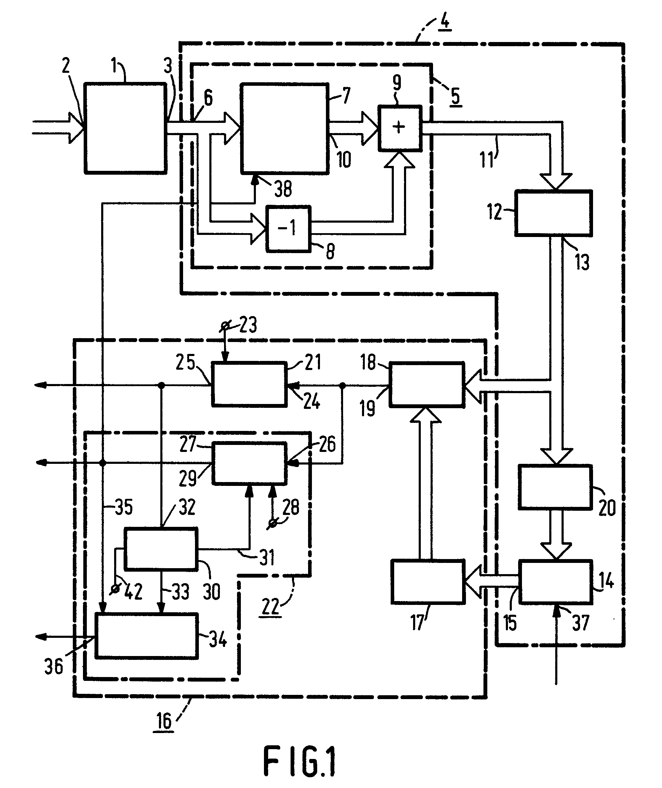

In Fig. 1 ist mit 1 ein digitales Tiefpaßfilter bezeichnet, dem an einem Eingang 2 ein digitales Fernsehsignal zugeführt wird, das aus einer Folge digitaler Abtastwerte besteht und ein Bildsignal, Synchronimpulse sowie ein Farbartsynchronsignal umfaßt. Jeder Abtastwert umfaßt beispielsweise acht Bit, die dem Tiefpaßfilter 1 in paralleler Form zugeleitet werden.

Das Tiefpaßfilter 1 begrenzt die Bandbreite des Fernsehsignals auf den Bereich bis 1 MHz, wodurch insbesondere die Farbanteile im Bildsignal sowie das Farbartsynchronsignal unterdrückt werden. Am Ausgang 3 des Tiefpaßfilters 1 wird daher ein Fernsehsignal abgegeben, das außer den Synchronimpulsen nur noch niederfrequente Anteile des Leuchtdichteanteils des Bildsignals enthält. Dieses Signal wird einem Eingang 6 einer in einer Pegeldetektionsstufe 4 enthaltenen Klemmschaltung 5 zugeführt.

Die Klemmschaltung 5 umfaßt eine Schwarzwertdetektionsstufe 7, eine Vorzeichenumkehrstufe 8 sowie eine Addierschaltung 9. Ein Beispiel für eine Schwarzwertdetektionsstufe 7 ist aus der DE-OS 32 14 756 im Prinzip bekannt. In einer derartigen Schwarzwertdetektionsstufe wird der Wert des Fernsehsignals mit einem internen Referenzwert verglichen. Ist der Wert des Fernsehsignals größer als der Referenzwert, wird der Referenzwert um einen bestimmten

0 161 714

PHD 84-077 EP

Betrag vergrößert. Ist das Fernsehsignal dagegen kleiner als der Referenzwert, so wird der Referenzwert um einen anderen bestimmten Betrag verringert. Am Ausgang 10 der Schwarzwertdetektionsstufe 7 wird dann der Wert eines ersten, dem Schwarzwert des Fernsehsignals entsprechenden Pegels abgegeben.

Das Ausgangssignal des digitalen Tiefpaßfilters 1 wird über den Eingang 6 der Klemmschaltung 5 außerdem der Vorzeichenumkehrstufe 8 zugeleitet und darin in seinem Vorzeichen umgekehrt. Dieses im Vorzeichen umgekehrte Signal und der Wert des zweiten Pegels vom Ausgang 10 der Schwarzwertdetektionsstufe 7 werden jeweils einem Eingang der Addierschaltung 9 zugeleitet. Bei der Addition der Signale an den Eingängen der Addierschaltung 9 entsteht ein mit seinem Schwarzwert auf einen konstanten Wert, im vorliegenden Beispiel auf Null, geklemmtes Signal, das am Ausgang 11 der Klemmschaltung 5 anliegt.

Die Pegeldetektionsstufe 4 enthält weiterhin eine Bildsignalabtrennstufe 12, der das mit seinem Schwarzwert auf einen konstanten Wert geklemmte Signal vom Ausgang 11 der Klemmschaltung 5 zugeleitet wird. Da in diesem Signal der erste Pegel den Wert Null einnimmt, weisen die zu den Synchronimpulsen gehörenden Werte des Signals ein anderes Vorzeichen auf als die zum Bildsignal gehörenden Werte. In der Bildsignalabtrennstufe 12 werden nun alle Signalanteile unterdrückt, deren Vorzeichen dem der Werte des Bildsignals entsprechen. Am Ausgang 13 der Bildsignalabtrennstufe 12 tritt dann nur noch ein den Synchronimpulsen entsprechendes Signal auf.

Das Signal vom Ausgang 13 der Bildsignalabtrennstufe 12 wird einem Amplitudenmittelwertdetektor 14 zugeleitet, in dem während der Synchronimpulse über eine Anzahl zu diesen gehörender digitaler Abtastwerte gemittelt wird. Der
Mittelwert dieser Abtastwerte stellt dann ein von Störungen befreites Maß für die Amplitude der Synchronimpulse
dar. Dieser Wert wird an einem Ausgang 15 des Amplitudenmittelwertdetektors 14 abgegeben.

Die Schaltungsanordnung nach Fig. 1 enthält ferner eine
Synchronsignalformstufe 16, die eine Schneidepegeleinstellstufe 17 und eine Vergleichsstufe 18 umfaßt. Der
Schneidepegeleinstellstufe 17 wird vom Ausgang 15 des
Amplitudenmittelwertdetektors 14 der Wert des zweiten, der
Amplitude der Synchronimpulse entsprechenden Pegels zugeführt. Sie leitet daraus einen Schneidepegel ab, der vorzugsweise der Hälfte des Wertes des zweiten Pegels entspricht, d.h. gleich dem Mittelwert der Werte des ersten
und des zweiten Pegels ist. Der Vergleichsstufe 18 wird
einerseits der Wert des Schneidepegels und andererseits
das mit seinem Schwarzwert auf einen konstanten Wert
geklemmte Signal vom Ausgang 13 der Bildsignalabtrennstufe
12 zugeleitet. Die Vergleichsstufe 18 ist vorzugsweise als
digitaler Komparator ausgebildet, der an seinem Ausgang 19
ein Synchronsignal abgibt, das einen ersten Wert annimmt,
wenn der Wert des mit seinemSchwarzwert auf einen konstanten Wert geklemmten Signals vom Ausgang 13 der Bildsignalabtrennstufe 12 kleiner ist als der Wert des Schneidepegels, und das einen zweiten Wert annimmt, wenn der Wert
des Signals am Ausgang 13 größer ist als der Wert des
Schneidepegels. Das von der Vergleichsstufe 18 abgegebene
Synchronsignal entspricht somit unmittelbar den von
Störungen befreiten Synchronimpulsen im Fernsehsignal.
Dabei werden alle Störungen unterdrückt, die den Schneidepegel nicht über- bzw. unterschreiten.

Die Schneidepegeleinstellstufe 17 weist bevorzugt eine
tiefpaßartige Charakteristik derart auf, daß nur sehr langsame Änderungen des Amplitudenmittelwerts vom Ausgang 15 an die Vergleichsstufe 18 weitergeleitet werden. Dies entspricht einer Mittelung der vom Amplitudenmittelwertdetektor 14 gelieferten Werte über einen mehrere Zeilendauern des Fernsehsignals umfassenden Zeitraum. Dadurch werden Schwankungen des Schneidepegels auch beim Fehlen einzelner Synchronimpulse unterdrückt.

Die Pegeldetektionsstufe 4 enthält gegebenenfalls weiterhin eine Verzögerungsstufe 20, über die das Signal vom Ausgang 13 der Bildsignalabtrennstufe 12 zum Amplitudenmittelwertdetektor 14 geführt wird. Mit der Verzögerungsstufe 20 kann ein Laufzeitausgleich derart durchgeführt werden, daß der aus einem Synchronimpuls ermittelte Schneidepegel von der Schneidepegeleinstellstufe 17 gleichzeitig mit dem nachfolgenden Synchronimpuls der Vergleichsstufe 18 zugeführt wird.

Das Synchronsignal vom Ausgang 19 der Vergleichsstufe 18 wird einem Eingang einer Zeilensynchronimpulsgeberstufe 21 sowie einem Eingang einer Bildsynchronimpulsgeberstufe 22 zugeführt. Die Zeilensynchronimpulsgeberstufe 21 umfaßt im wesentlichen einen Zeitgeber mit einem Zähler, dem ein Abtasttakt über einen Zähleingang 23 zugeleitet wird. Wenn am Eingang 24 vom Ausgang 19 der Vergleichsstufe 18 her ein Synchronimpuls aus dem Synchronsignal anliegt, wird der Zähler in der Zeilensynchronimpulsgeberstufe 21 aktiviert und beginnt mit der Frequenz des Abtasttaktes von seiner letzten Stellung an aufwärts zu zählen. Am Ende eines jeden Synchronimpulses bleibt der Zähler zunächst aktiviert und zählt mit der Frequenz des Abtasttaktes abwärts bis in eine Grundstellung, in der er selbsttätig verriegelt, bis der nächste Synchronimpuls im Synchronsignal eintrifft. Wenn dabei der Wert des Synchronsignals den Schneidepegel um eine bestimmte Anzahl Perioden des Abtasttaktes mehr über- als unterschritten hat, d.h., wenn der Zähler bis zu einer dieser Anzahl Perioden des Abtasttaktes entsprechenden Stellung aufwärts gezählt hat, gibt die Zeilensynchronimpulsgeberstufe 21 an ihrem Ausgang 25 einen Impuls eines Zeilensynchronsignals ab. Dieser Impuls dauert an, bis der Zähler in der Zeilensynchronimpulsgeberstufe 21 in seine Grundstellung zurückgezählt hat. Auf diese Weise werden kurze, impulsartige Störungen im Synchronsignal am Ausgang 19 der Vergleichsstufe 18 wirksam unterdrückt und auch ein eventuell nicht monotoner Anstieg bzw. Abfall der Impulsflanken im Synchronsignal ausgeglichen.

Bei der Inbetriebnahme der Schaltungsanordnung kann der Zähler in der Zeilensynchronimpulsgeberstufe 21 in seine Grundstellung gesetzt werden. Die Zeilensynchronimpulsgeberstufe 21 gibt dann stets ein Zeilensynchronsignal mit einem definierten Verlauf ab.

Das Synchronsignal vom Ausgang 19 der Vergleichsstufe 18 wird außerdem einem Eingang 26 eines Zeitgebers 27 zugeführt. Der Zeitgeber 27 weist grundsätzlich die gleiche Funktionsweise wie der Zeitgeber in der Zeilensynchronimpulsgeberstufe 21 auf. Auch ihm wird über einen Zähleingang 28 der Abtasttakt zugeführt. Bei dem Zeitgeber 27 ist allerdings die Anzahl der Perioden des Abtasttaktes, die der Wert des Synchronsignals den Schneidepegel mehr über- als unterschritten haben muß, bevor am Ausgang 29 des Zeitgebers 27 ein Impuls des Bildsynchronsignals auftritt, im Vergleich zur Zeilensynchronimpulsgeberstufe 21 wesentlich größer. Beispielsweise beträgt diese Anzahl bei der Zeilensynchronimpulsgeberstufe 21 ungefähr 20 Perioden, während sie bei dem Zeitgeber 27 ungefähr 512 Perioden beträgt. Diese Anzahl ist bei dem Zeitgeber 27 auf einen geringeren Wert, beispielsweise 128, umschaltbar. Die Umschaltung auf diesen niedrigeren Wert erfolgt durch eine Ausgleichsimpulsdetektionsanordnung 30 über eine Leitung 31 immer dann, wenn in der Ausgleichsimpulsdetektionsanordnung 30 in dem ihr über einen Eingang 32 zugeführten Zeilensynchronsignal Vorausgleichsimpulse, d.h. Impulse mit einem zeitlichen Abstand von einer halben Zeilendauer des Fernsehsignals, erkannt werden.

Die Ausgleichsimpulsdetektionsanordnung 30 leitet ferner dieses über die Leitung 31 abgegebene Ausgleichsimpulskennsignal auch über eine Leitung 33 an eine Überwachungsstufe 34 weiter, der über eine weitere Leitung 35 auch das Bildsynchronsignal vom Ausgang 29 des Zeitgebers 27 zugeführt wird. Die Überwachungsstufe 34 umfaßt im wesentlichen eine UND-Verknüpfung und gibt an einem Ausgang 36 ein Überwachungssignal ab, das das zeitliche Zusammenfallen eines Impulses des Bildsynchronsignals mit dem Ausgleichsimpulskennsignal anzeigt. Dieser Fall tritt beim Vorliegen eines normgerechten Verlaufs des Synchronsignals auf. Fehlt dagegen beispielsweise während eines Impulses des Bildsynchronsignals das Ausgleichsimpulskennsignal, liegt ein nicht normgerechter Verlauf des Synchronsignals vor.

Von den Ausgängen 25 und 29 werden das Zeilen- bzw. Bild-synchronsignal einer nicht dargestellten Oszillatoranord-nung zugeleitet, in der Oszillatoren durch diese Synchronsignale auf bekannte Weise synchronisiert werden. Auch das Signal vom Ausgang 36 der Überwachungsstufe 34 wird dieser Oszillatoranordnung zugeführt, um gegebenenfalls die Phasenlage der von der Oszillatoranordnung abgegebenen Schwingungen beim Auftreten normgerechter bzw. nicht normgerechter Verläufe des Synchronsignals zu korrigieren.

Der Amplitudenmittelwertdetektor 14 enthält gegebenenfalls eine Torschaltung, der über einen Eingang 37 von der

0 161 714

Oszillatoranordnung ein Torsignal zugeführt wird. Die Torschaltung wählt bestimmte Abtastwerte des Signals vom Ausgang 13 der Bildsignalabtrennstufe 12 aus, über die zur Berechnung des Amplitudenmittelwerts der Synchronimpulse gemittelt werden soll. Bei der Inbetriebnahme der beschriebenen Schaltungsanordnung, wenn die Oszillatoranordnung noch nicht gegenüber dem Fernsehsignal synchronisiert ist, wird es vorkommen, daß, gesteuert durch das Torsignal am Eingang 37, nicht ein Synchronimpuls, sondern der Wert des ersten Pegels, d.h. der Schwarzwert des Fernsehsignals, abgetastet wird. Über die Schneidepegeleinstellstufe 17 wird dann ein sehr geringer Schneidepegel eingestellt, so daß in der Vergleichsstufe 18 auf jeden Fall die Synchronimpulse erkannt und über die Zeilen- bzw. Bildsynchronimpulsgeberstufe 21 bzw. 22 der Oszillatoranordnung weitergeleitet werden. Dadurch ist gewährleistet, daß die Oszillatoranordnung bei Inbetriebnahme der Schaltungsanordnung einwandfrei synchronisiert werden kann.

Die Schwarzwertdetektionsstufe 7 kann einen Sperreingang 38 enthalten, dem das Bildsynchronsignal vom Ausgang 29 des Zeitgebers 27 zugeführt wird. Am Ausgang 10 der Schwarzwertdetektionsstufe 7 wird dadurch während des Bildwechselsignals, d.h. während des Auftretens eines Impulses im Bildsynchronsignal, der zuletzt detektierte Wert des ersten Pegels festgehalten. Der Schwarzwert wird dann auch während der in Impulslänge und Folgefrequenz abweichenden Impulse im Bildwechselsignal auf einem konstanten Wert gehalten.

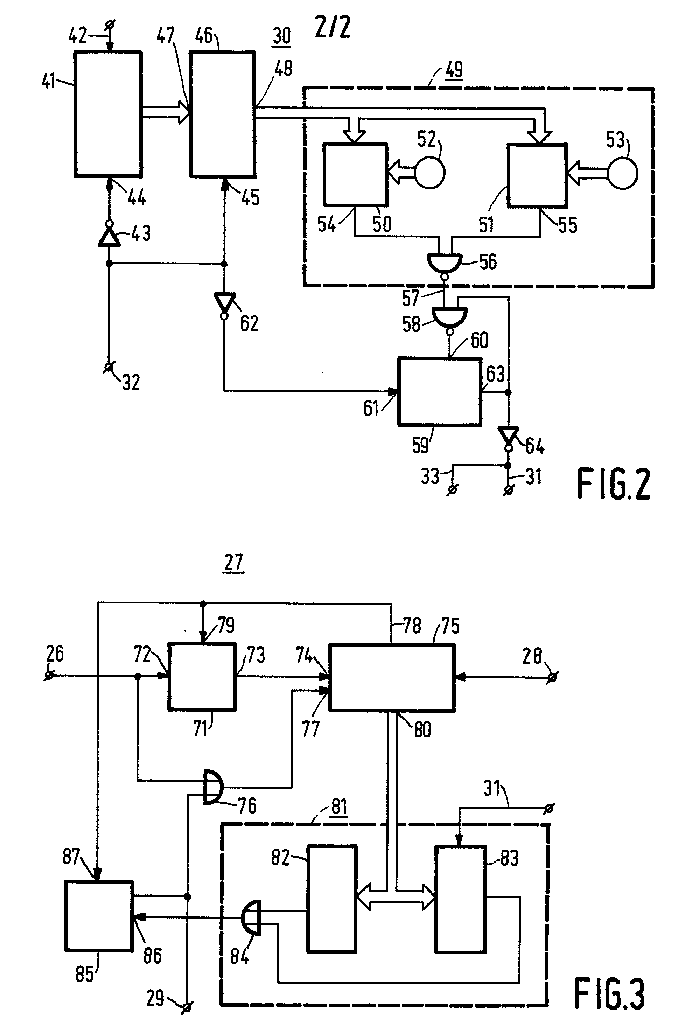

Fig. 2 zeigt ein Beispiel für eine Ausgleichsimpulsdetektionsanordnung 30 aus der Schaltungsanordnung nach Fig. 1. Sie umfaßt eine erste Zählvorrichtung 41, der an einem Zähleingang 42 der Abtasttakt zugeführt wird und die die Perioden dieses Abtasttaktes zählt. Die erste Zählvorrichtung 41 weist weiterhin einen Rücksetzeingang 44 auf, dem über den Eingang 32 und einen Inverter 43 das Zeilensynchronsignal vom Ausgang 25 der Zeilensynchronimpulsgeberstufe 21 zugeführt wird. Über den Rücksetzeingang 44 wird die erste Zählvorrichtung 41 mit der Vorderflanke jedes Impulses aus dem Zeilensynchronsignal in ihre Anfangsstellung zurückgesetzt und beginnt dann mit der nächsten Periode des Abtasttaktes am Zähleingang 42 erneut zu zählen.

Das Zeilensynchronsignal wird außerdem einem Schreibeingang 45 eines Registers 46 zugeleitet, das beim Auftreten einer Impulsvorderflanke im Zeilensynchronsignal ein der augenblicklichen Stellung der ersten Zählvorrichtung 41 entsprechendes Signal über einen Dateneingang 47 unmittelbar vor dem Rücksetzen der ersten Zählvorrichtung 41 in ihren Anfangszustand lädt. Bis zum Auftreten der nächsten Impulsvorderflanke im Zeilensynchronsignal wird so die höchste von der ersten Zählvorrichtung 41 erreichte Stellung vor dem Rücksetzen im Register 46 gespeichert.

Das dieser Stellung entsprechende Signal wird über einen Datenausgang 48 einer Auswahlanordnung 49 und darin insbesondere jeweils einem Eingang zweier digitaler Komparatoren 50, 51 zugeführt. Zweite Eingänge der Komparatoren 50, 51 sind mit je einem Festwertspeicher 52, 53 verbunden. In den Festwertspeichern 52, 53 können bestimmten Zahlen entsprechende Signale fest vorgegeben oder auch veränderbar einprogrammiert sein. Jeder der Komparatoren 50, 51 vergleicht die Signale vom Datenausgang 48 des Registers 46 mit den ihm aus den Festwertspeichern 52, 53 zugeführten Signalen. Der erste Komparator 50 gibt an seinem Ausgang 54 ein einer logischen "1" entsprechendes Signal ab, wenn die im Register 46 gespeicherte Stellung der ersten Zählvorrichtung 41 größer ist als die im ersten Festwertspeicher 52 gespeicherte Zahl, und sonst ein einer logischen "0" entsprechendes Signal, während der zweite Komparator 51 an seinem Ausgang 55 ein einer logischen "1" entsprechendes Signal abgibt, wenn die im Register 46 gespeicherte Zahl kleiner ist als diejenige im zweiten Festwertspeicher 53, und sonst ein einer logischen "0" entsprechendes Signal abgibt. Über ein NAND-Gatter 56 werden die Signale von den Ausgängen 54, 55 zu einem Auswahlsignal auf einer Leitung 57 zusammengefaßt. Das Auswahlsignal entspricht einer logischen "0", wenn die im Register 46 gespeicherte Zahl zwischen den Zahlen aus den Festwertspeichern 52, 53 liegt, und sonst einer logischen "1".

Das Auswahlsignal auf der Leitung 57 entriegelt über ein weiteres NAND-Gatter und einen Freigabeeingang 60 einen Synchronimpulszähler 59, dem an einem Zähleingang 61 über einen weiteren Inverter 62 das Zeilensynchronsignal zugeleitet wird. Vom Übertragausgang 63 des Synchronimpulszählers 59 ist eine Rückkopplung über das weitere NAND-Gatter 58 auf den Freigabeeingang 60 derart geführt, daß nach Ausführung des ersten Zählschrittes durch den Synchronimpulszähler 59 dieser auch nach Wegfall des Auswahlsignals auf der Leitung 57 so lange weiterzählt, bis das Signal vom Übertragausgang 63 den Synchronimpulszähler 59 über den Freigabeeingang 60 wieder verriegelt. Der Synchronimpulszähler 59 ist vorzugsweise ein Vier-Bit-Zähler, der somit nach 16 Zählschritten entsprechend 16 Impulsen im Zeilensynchronsignal wieder in seine Anfangsstellung gelangt.

Die in den Festwertspeichern 52, 53 gespeicherten Zahlen sind derart ausgewählt, daß auf der Leitung 57 nur dann ein Auswahlsignal auftritt, wenn die Anzahl der zwischen zwei Impulsvorderflanken im Zeilensynchronsignal gezählten Perioden des Abtasttaktes wenigstens nahezu einer halben Zeilendauer des Fernsehsignals entspricht. Das Auswahlsignal zeigt dann mit einem Signalübergang von logisch "1" auf logisch "0" das Auftreten von Vorausgleichsimpulsen an. Je geringer die Differenz zwischen den in den Festwertspeichern 52, 53 gespeicherten Zahlen ist, desto unempfindlicher ist die Ausgleichsimpulsdetektionsanordnung gegenüber außerhalb der Impulse des Zeilensynchronsignals auftretenden Störungen. Bei einer praktischen Ausführung der vorstehend beschriebenen Schaltungsanordnung ist die Frequenz des Abtasttaktes auf 17,7 MHz festgelegt worden. Im ersten Festwertspeicher 52 ist die Zahl 525, im zweiten Festwertspeicher 53 die Zahl 600 gespeichert. Das entspricht einem zeitlichen Abstand aufeinander folgender Impulsvorderflanken im Zeilensynchronsignal im Bereich von 29,4 bis 33,6 µsec, während eine halbe Zeilendauer im Fernsehsignal bei der PAL-Norm 32 µsec beträgt.

Das Signal vom Übertragausgang 63 des Synchronimpulszählers 59 wird über einen dritten Inverter 64 als Trabantenkennsignal den Leitungen 31, 33 zugeführt. Es stellt einen ungefähr 8 Zeilendauern des Fernsehsignals langen Impuls dar.

Die Fig. 3 zeigt ein Beispiel für eine Schaltung des Zeitgebers 27. Vom Eingang 26 wird das Synchronsignal dem Setzeingang 72 einer ersten Kippstufe 71 zugeführt. Durch die Vorderflanke eines jeden Impulses im Synchronsignal wird die erste Kippstufe 71 in einen Zustand überführt, in dem das an ihrem Ausgang 73 auftretende Signal, das einem Freigabeeingang 74 einer zweiten Zählvorrichtung 75 zugeleitet wird, diese zweite Zählvorrichtung 75 freigibt, so daß danach von dieser die Perioden des über den Zähleingang 28 des Zeitgebers 27, der mit dem Zähleingang der zweiten Zählvorrichtung 75 übereinstimmt, gezählt werden. Die zweite Zählvorrichtung 75 zählt dabei von einer Anfangsstellung an aufwärts, solange ein Impuls des Synchronsignals vom Eingang 26 über ein erstes ODER-Gatter 76 an einem Zählrichtungseingang 77 der zweiten Zählvorrichtung 75 anliegt. Nach Auftreten der Rückflanke des Impulses im Synchronsignal behält die erste Kippstufe 71 zunächst noch ihren bisherigen Zustand bei, jedoch tritt am Zählrichtungseingang 77 mit der Rückflanke eine Signaländerung auf. Dadurch kehrt sich die Zählrichtung der zweiten Zählvorrichtung 75 um, und diese zählt rückwärts bis zum Anfangszustand. Bei Erreichen dieses Anfangszustandes gibt sie an einem Übertragausgang 78 ein Übertragsignal ab, durch das die erste Kippstufe 71 über einen Rücksetzeingang 79 zurückgesetzt wird. Über den Freigabeeingang 74 wird dann die zweite Zählvorrichtung 75 wieder verriegelt, so daß sie in ihrem Anfangszustand bleibt.

Ein der Stellung der zweiten Zählvorrichtung 75 entsprechendes Signal wird über einen Datenausgang 80 der zweiten Zählvorrichtung 75 einer Dekoderschaltung 81 zugeleitet, die einen ersten und einen zweiten Dekoder 82 und 83 sowie ein zweites ODER-Gatter 84 umfaßt. Die Dekoder 82, 83 sind bevorzugt über logische UND-Verknüpfungen realisiert. Jeder der Dekoder 82, 83 dekodiert eine bestimmte Stellung der zweiten Zählvorrichtung 75, wobei der erste Dekoder 82 eine wesentlich höhere Zählerstellung, beispielsweise entsprechend der Zahl 512, als der zweite Dekoder 83, beispielsweise entsprechend der Zahl 128, dekodiert. Während sich der erste Dekoder 82 ständig im aktiven Zustand befindet, wird der zweite Dekoder 83 über die Leitung 31 nur beim Auftreten eines Ausgleichsimpulskennsignals eingeschaltet. Am Ausgang des zweiten ODER-Gatters 84 tritt ein Signal auf, wenn einer der beiden Dekoder 82, 83 eine Stellung der zweiten Zählvorrichtung 75 dekodiert.

Die vom ersten Dekoder 82 dekodierte Stellung der zweiten Zählvorrichtung 75 ist derart gewählt, daß beim Auftreten von Zeilensynchronimpulsen und Vorausgleichsimpulsen im Synchronsignal diese Stellung nicht erreicht wird und die zweite Zählvorrichtung 75 somit beim Auftreten der Rückflanke des jeweiligen Impulses die Zählrichtung umkehrt und bis in die Anfangsstellung zurückzählt. Am Ausgang 29 des ersten Zeitgebers 27 tritt dann keine Signaländerung auf.

Die während des Bildwechselsignals im Synchronsignal auftretenden Bildwechselimpulse sind dagegen so lang, daß die zweite Zählvorrichtung 75 noch vor dem Auftreten der Rückflanke dieser Bildwechselimpulse die vom ersten Dekoder 82 dekodierte Zählerstellung erreicht. Über das zweite ODER-Gatter 84 wird dann einer zweiten Kippstufe 85 über einen Setzeingang 86 ein Setzimpuls zugeführt, die zweite Kippstufe 85 schaltet in ihren anderen Zustand um und am Ausgang 29 tritt eine Signaländerung auf. Diese Signaländerung erfolgt im gleichen Sinne wie die Signaländerung im Synchronsignal mit der Vorderflanke des Bildwechselimpulses und wird über das erste ODER-Gatter 76 auch dem Zählrichtungseingang 77 der zweiten Zählvorrichtung 75 zugeleitet. Dadurch bleibt auch beim Auftreten der Rückflanke des Bildwechselimpulses am Eingang 26 des ersten Zeitgebers <u>27</u> die Zählrichtung derzweiten Zählvorrichtung 75 erhalten. Demzufolge zählt die zweite Zählvorrichtung 75 die Perioden des Abtasttaktes ungehindert weiter, bis sie über ihre höchste Stellung hinweg in ihre Anfangsstellung zurückgelangt. Dann wird durch das vom Übertragausgang 78 abgegebene Übertragsignal außer der ersten Kippstufe 71 auch die zweite Kippstufe 85 über einen Rücksetzeingang 87 zurückgesetzt, was wiederum eine Signaländerung am Ausgang 29 bewirkt. Der erste Zeitgeber 27
verbleibt dann bis zum Eintreffen der nächsten Impulsvorderflanke im Synchronsignal am Eingang 26 in dem
erreichten Zustand.

Werden von der Ausgleichsimpulsdetektionsanordnung 30
Vorausgleichsimpulse erkannt und durch Abgabe eines Ausgleichsimpulskennsignals auf der Leitung 31 angezeigt,
wird der zweite Dekoder 83 eingeschaltet. Dadurch wird die
zweite Kippstufe 85 bereits bei einer niedrigeren Stellung
der zweiten Zählvorrichtung 75, d.h. zu einem wesentlich
früheren Zeitpunkt, am Setzeingang 86 mit einem Setzsignal
beaufschlagt, so daß auch der Impuls des am Ausgang 29
abgegebenen Bildsynchronsignals zu einem früheren Zeitpunkt beginnt.

PATENTANSPRÜCHE

1.     Schaltungsanordnung zum Bilden eines Bildsynchronsignals aus einem Synchronsignal, das wenigstens ein
Zeilen- und ein Bildsynchronsignal enthält und das aus
einem ankommenden Videosignal abgeleitet wird, mit einer
Bildsynchronimpulsgeberstufe zum Ableiten des Bildsynchronsignals, die eine Ausgleichsimpulsdetektionsanordnung zum Erkennen eines genormten, im Synchronsignal enthaltenen Bildwechselsginals enthält, welche ein Ausgleichsimpulskennsignal abgibt, wenn das Synchronsignal
Ausgleichsimpulse enthält, dadurch gekennzeichnet, daß die
Ausgleichsimpulsdetektionsanordnung eine Auswahlanordnung
zum Abgeben des Ausgleichsimpulskennsignals enthält, wenn
im Zeilensynchronsignal Impulse im Abstand wenigstens
nahezu einer halben Zeilendauer des Videosignals auftreten
und daß die Bildsynchronimpulsgeberstufe einen Zeitgeber
zum Abgeben des Bildsynchronsignals enthält, der einen
Eingang für das Ausgleichsimpulskennsignal und einen
Eingang für das Synchronsignal aufweist und der durch das
Ausgleichsimpulskennsignal umschaltbar ist.

2.     Schaltungsanordnung nach Anspruch 1,
dadurch gekennzeichnet, daß die Ausgleichsimpulsdetektionsanordnung eine mit einer Zeilensynchronimpulsgeberstufe zum Abgeben des Zeilensynchronsignals verbundenen
ersten Zählvorrichtung zum Zählen der Anzahl der Perioden
eines Abtasttaktes in Zeitintervall zwischen zwei aufeinanderfolgenden Impulsen des Zeilensynchronsignals
umfaßt, und daß eine Auswahlanordnung einen mit der ersten
Zählvorrichtung gekoppelten Eingang für die Zuführung
eines dieser Anzahl entsprechenden Signals aufweist und das Ausgleichsimpulskennsignal abgibt, wenn diese Anzahl innerhalb eines bestimmten Wertebereichs liegt, der eine halbe Zeilendauer im Videosignal umfaßt.

3.      Schaltungsanordnung nach Anspruch 1, dadurch gekennzeichnet, daß der Zeitgeber eine zweite Zählvorrichtung zum Zählen der Perioden eines Abtasttaktes nach dem Auftreten der Vorderflanke eines Impulses in dem Zeitgeber zugeführten Synchronsignal enthält und daß der Zeitgeber das Bildsynchronsignal abgibt, wenn im Synchronsignal Impulse vorgebbarer Mindestdauer auftreten.

4.      Schaltungsanordnung nach Anspruch 3, dadurch gekennzeichnet, daß der erste Zeitgeber eine Dekoderschaltung zum Dekodieren der Stellung der zweiten Zählvorrichtung umfaßt, die der vorgebbaren Mindestdauer der Impulse entspricht.

5.      Schaltungsanordnung nach Anspruch 4, dadurch gekennzeichnet, daß die von der Dekoderschaltung dekodierte Stellung der zweiten Zählvorrichtung durch das Ausgleichsimpulskennsignal umschaltbar ist.

6.      Schaltungsanordnung nach Anspruch 1, dadurch gekennzeichnet, daß die Bildsynchronimpulsgeberstufe eine Überwachungsstufe zum Abgeben eines einem normgerechten oder nicht normgerechten Verlauf des Synchronsignals anzeigenden Überwachungssignals enthält, die einen Eingang für das Ausgleichsimpulskennsignal und einen Eingang für das Bildsynchronsignal aufweist.

7.      Schaltungsanordnung nach Anspruch 6, dadurch gekennzeichnet, daß die Überwachungsstufe im wesentlichen eine UND-Verknüpfung umfaßt.

FIG.1

FIG.2

FIG.3